# FASCICULE DE BREVET EUROPEEN

(11) **EP 2 879 819 B1**
(45) Date de publication et mention de la délivrance du brevet: **14.11.2018**
(21) Numéro de dépôt: 13744537.5
(22) Date de dépôt: 31.07.2013
(51) Int. Cl.: B22F 3/105, B29C 67/00

(54) **MACHINE ET PROCÉDÉ POUR LA FABRICATION ADDITIVE À BASE DE POUDRE**
MASCHINE UND VERFAHREN ZUR HERSTELLUNG EINES AUF PULVER BASIERENDEN ADDITIVS
MACHINE AND METHOD FOR POWDER-BASED ADDITIVE MANUFACTURING

(30) Priorité: 31.07.2012 FR 1257415
(43) Date de publication de la demande: 10.06.2015
(73) Titulaire: Compagnie Générale des Etablissements Michelin, 63000 Clermont-Ferrand (FR)
(72) Inventeur: PIALOT, Frédéric, F-63040 Clermont-Ferrand Cedex 9 (FR); TORRES-CASTELLANO, Miguel, F-63040 Clermont-Ferrand Cedex 9 (FR); WALRAND, Gilles, F-63040 Clermont-Ferrand Cedex 9 (FR); POURCHER, Benoit, F-63040 Clermont-Ferrand Cedex 9 (FR)
(74) Mandataire: Noel, Luminita
(86) Numéro de dépôt international: PCT/EP2013/066130
(87) Numéro de publication internationale: WO 2014/020085

(56) Documents cités:
- EP-A2- 1 704 989
- WO-A1-2007/003244
- DE-A1-102006 032 025
- DE-A1-102007 014 968
- DE-A1-102009 015 130
- DE-A1-102010 020 416
- DE-U1- 20 318 721
- US-A- 5 354 414
- US-B1- 6 554 600
- US-B2- 7 204 684

## Description

L'invention concerne les machines et les procédés pour la fabrication additive à base de poudre par frittage ou fusion des grains de ladite poudre à l'aide d'un faisceau énergétique comme un rayonnement électromagnétique (par exemple un faisceau laser) ou un faisceau de particules (par exemple un faisceau d'électrons). Un tel procédé de fabrication additive à base de poudre conduit à une consolidation successive, couche par couche, à l'aide d'un faisceau énergétique ou de particules, des zones sélectionnées d'une strate de matériau pulvérulent, les zones consolidées correspondant à des sections successives de l'objet tridimensionnel.

Plus précisément, l'invention se rapporte aux moyens et procédés pour le transfert d'un objet tridimensionnel entre un poste de fabrication additive et un poste d'évacuation de l'objet fabriqué, plus particulièrement du type utilisant un conteneur interchangeable à l'intérieur duquel se trouve l'objet fabriqué.

Le document WO 90/03893 décrit une machine pour la fabrication d'un objet tridimensionnel par consolidation successive, couche par couche, à l'aide d'un faisceau laser, d'un matériau pulvérulent, qui utilise un conteneur mobile. Le conteneur renferme le plateau de support de l'objet et des moyens d'entraînement en translation verticale de ce dernier. Le conteneur est déplacé sur des rails horizontaux entre les postes de dépose, d'étalement et de compression de la poudre, ainsi que celui de traitement au faisceau laser de la couche de poudre préparée. Les inconvénients de cette solution sont liés au fait que l'objet est fabriqué à l'intérieur d'un conteneur qui renferme, de plus, les moyens d'entraînement, ce qui fait qu'il est plus lourd, plus encombrant et donc plus difficile à transporter et plus coûteux. De surcroît, ce conteneur doit être positionné de manière précise au regard de chaque poste de travail de la machine, au risque d'apparition d'erreurs dans la géométrie de l'objet fabriqué.

Le document US-6554600-B1 divulgue un autre exemple de machine permettant de fabriquer un objet tridimensionnel par frittage de poudre à l'aide d'un faisceau laser. Cette machine comprend un espace de construction au sein duquel est agencé un conteneur interchangeable comportant un cadre de construction et une plateforme de support de l'objet à fabriquer. L'objet à fabriquer est construit à l'intérieur du conteneur qui est retiré de l'espace de construction à la fin de l'opération. Dans une variante, le conteneur renferme, en plus de la plateforme et de l'objet à fabriquer, un mécanisme de support et de déplacement en translation de la plateforme. Les inconvénients de cette configuration sont l'encombrement important et le poids du conteneur à transporter. Dans une autre variante, la paroi arrière du conteneur comprend des fentes verticales à travers lesquelles s'engagent et coulissent des moyens de fixation de la plateforme à un bras latéral d'actionnement en translation verticale de celle-ci. L'inconvénient de cette configuration est qu'elle fait appel à un actionnement en porte à faux du plateau impliquant des fortes sollicitations du bras d'actionnement, notamment lors de la compression de la poudre ou lors de la confection des pièces de grandes dimensions. Par ailleurs, des moyens d'étanchéité complexes doivent être agencés au niveau des fentes verticales afin d'éviter que la poudre ne s'échappe à l'extérieur du conteneur. De surcroît, la désolidarisation de la plateforme du conteneur ainsi que le montage d'une nouvelle plateforme sont des opérations assez délicates, la plateforme nécessitant un positionnement très précis par rapport à ce dernier.

Une solution a été proposée dans le document US-7204684-B2 où la plateforme qui porte l'objet à fabriquer est montée moyennant un cadre de support à l'intérieur d'un conteneur interchangeable. La plateforme est déplacée verticalement en étant entraînée par les crochets d'un dispositif d'actionnement situé à l'extérieur du conteneur et qui vient au contact de la plateforme en traversant des canaux verticaux pratiqués dans les parois latérales du conteneur. Afin d'éviter que la poudre du conteneur ne pollue l'espace situé à l'extérieur de celui-ci, des moyens d'étanchéité étagés sont prévus à la périphérie du cadre de support. Le cadre comporte ainsi une lame métallique surmontée d'un joint en feutre assurant l'étanchéité au niveau de chaque canal vertical. Mis à part l'actionnement par un système en porte à faux, comme dans le cas du document précédent, cette configuration présente un autre désavantage qui concerne le frottement induit par un tel système d'étanchéité renforcée augmentant l'effort de poussée du dispositif d'actionnement de la plateforme.

Le document US-6824714-B1 décrit une autre configuration de machine de fabrication additive d'un objet à base de poudre par frittage laser, la machine comportant un conteneur mobile qui est amené dans la zone de travail par un convoyeur à chaînes. Le conteneur forme un cadre de construction de l'objet et contient la plateforme de support de l'objet. De par le fait qu'il forme l'espace de construction de l'objet, le conteneur nécessite une grande précision d'exécution. La machine comporte par ailleurs des moyens de couplage entre le conteneur mobile et une enceinte de la zone de travail, ainsi qu'entre un actionneur vertical indépendant du conteneur et la plateforme de support. Afin de permettre un positionnement correct du conteneur au sein de la zone de travail de la machine, ces moyens de couplage font appel à des mécanismes de précision qui ne peuvent fonctionner qu'en présence d'une étanchéité poussée entre le conteneur et le plateau. En effet, si des particules de poudre venaient polluer les mécanismes de verrouillage du conteneur et du plateau, ces derniers deviendraient inopérants.

Un problème commun aux différentes propositions de l'état de la technique est la nécessité d'une grande précision d'exécution du conteneur interchangeable. En effet, de par le fait que l'objet est réalisé au sein même du conteneur, celui-ci nécessite des tolérances de fabrication et de montage qui sont très serrées, ce qui augmente le coût de fabrication de celui-ci.

Un problème supplémentaire est celui de l'encrassement de la machine par les particules de poudre lors de la fabrication de l'objet. Une solution a été proposée par le document WO 90/03893 susmentionné, notamment du fait que la machine intègre un dispositif d'aspiration des résidus de poudre restants après le compactage de la couche de poudre distribuée sur la zone de travail. Toutefois, une telle aspiration pratiquée avant la fusion risque de disloquer des particules de la couche de poudre préalablement préparée et augmente le temps de fabrication de l'objet.

On connaît par ailleurs le document DE 10 2006 032 025 qui décrit une machine de fabrication additive à base de poudre dans laquelle le cadre formant espace de construction de l'objet au sein du châssis de la machine peut être réduit aux dimensions d'un objet plus petit qu'initialement prévu en montant une chemise de construction sur le châssis et en lui associant des pistons de dimensions correspondantes. Ce document ne décrit pas de conteneur mobile de transport de l'objet et de ce fait, les opérations de chargement et de déchargement de l'objet sont laborieuses.

Une autre solution pour modifier l'espace de travail est décrite dans le document DE 10 2010 020 416 et, dans l'absence de conteneur mobile de transport de l'objet, elle présente les mêmes inconvénients que celle du document précédent.

Les documents WO 2007/003244 et DE 10 2009 015 130 décrivent, eux, des conteneurs mobiles permettant le transport de l'objet fabriqué dans une machine de fabrication additive à base de poudre. Le conteneur forme un cadre de construction pour l'objet à fabriquer et, de ce fait, le conteneur doit être réalisé de manière très précise, avec des tolérances très serrées. De surcroît, le conteneur renferme les moyens de déplacement vertical du plateau de fabrication de l'objet ce qui rend les opérations de transport moins aisées.

L'invention a donc pour objectif de pallier l'un au moins des inconvénients décrits ci-dessus et de proposer une machine et un procédé de fabrication additive à base de poudre à l'aide d'un faisceau énergétique d'un objet tridimensionnel permettant d'approvisionner et d'évacuer facilement l'espace de travail de la machine, tout en permettant de fabriquer un objet tridimensionnel avec une grande précision pour des coûts de fabrication moindres.

Ces objectifs sont atteints avec une machine pour la fabrication additive d'un objet tridimensionnel par frittage ou fusion de poudre à l'aide d'un faisceau énergétique agissant sur une couche de poudre dans une zone de travail, ladite zone de travail étant définie dans la partie supérieure d'une chemise de construction montée fixe au sein d'un châssis, chemise dans laquelle est fabriqué ledit objet supporté par un plateau de fabrication qui coulisse à l'intérieur de ladite chemise de construction lorsqu'il est entraîné en translation verticale par la tête d'un vérin placé selon l'axe central de ladite chemise, ladite machine étant caractérisée en ce que ledit plateau de fabrication est disposé à l'intérieur d'un conteneur de transport qui est agencé de manière amovible entre ladite chemise et ledit vérin, en ce que la machine comporte des moyens de déplacement vertical du conteneur de transport au contact de la chemise de construction, et en ce que le conteneur est ouvert en sa partie supérieure et en sa partie inférieure de manière à ce que, lorsque le vérin est actionné, la tête de ce dernier puisse transférer ledit plateau entre ledit conteneur de transport et ladite chemise de construction qui forme un cadre de construction autour dudit plateau.

La machine de l'invention comprend donc une chemise de construction dont les parois latérales définissent un cadre de construction à l'intérieur de laquelle est fabriqué l'objet tridimensionnel par déplacement progressif du plateau de fabrication à l'intérieur de la chemise au fur et à mesure de la solidification des couches de poudre disposées successivement sur le plateau et ceci jusqu'à l'obtention de l'objet. La machine comporte également un conteneur de transport renfermant le plateau de fabrication qui permet, en début d'opération de fabrication, l'amenée et la mise en place au sein de la machine d'un plateau vide, ainsi que le transport de l'objet fabriqué avec son plateau à l'extérieur de la machine à la fin de l'opération de fabrication. La machine comporte également des moyens de déplacement vertical du conteneur de transport au contact de la chemise. On peut ainsi insérer facilement le conteneur sous la chemise et, une fois le conteneur en place, de pouvoir venir le plaquer contre la chemise de construction de la machine afin de pouvoir ainsi confiner la poudre à l'intérieur du conteneur.

Selon l'invention également, ledit conteneur de transport est monté amovible entre ladite chemise de construction qui est, elle, montée fixe par rapport au châssis de la machine, et un vérin d'actionnement en translation verticale du plateau de fabrication dont l'axe est aligné sur l'axe central de l'ouverture de la chemise de fabrication. Par axe central de l'ouverture, on comprend l'axe passant par le centre géométrique de l'ouverture ou par le centre de gravité d'un plateau parfaitement centré par rapport à cette ouverture. Ainsi, lorsque le conteneur est inséré à l'intérieur de la machine, avec le plateau correctement positionné par rapport au vérin, ce dernier est transféré par le vérin à l'intérieur de la chemise de construction qui a le même référentiel que celui de la machine. Ceci permet d'utiliser un conteneur amovible simplifié qui a uniquement un rôle de transport de l'objet, du plateau et éventuellement de la poudre, et dont les tolérances de fabrication sont moins serrées que celle de la chemise de construction, tout en permettant la fabrication d'un objet tridimensionnel avec une très bonne précision.

Le conteneur et la chemise de fabrication sont prévus pour recevoir chacun l'objet fabriqué et, de ce fait, ils ont, de préférence chacun, une hauteur au moins égale à celle de l'objet fabriqué. Plus précisément, la chemise formant le cadre de construction est dimensionnée de manière à ce qu'elle puisse recevoir un objet de hauteur maximale Hmax, alors que lors le conteneur doit présenter une profondeur correspondant à la hauteur de l'objet Hmax additionnée de l'épaisseur du plateau et de celle de l'espace résiduel présent entre le plateau et le fond du conteneur.

De préférence, l'axe central de la tête de vérin est aligné avec l'axe central de ladite chemise et des moyens d'indexage sont prévus entre ledit conteneur et le châssis de la machine et des moyens de centrage sont prévus entre le plateau et la tête du vérin.

Le vérin et donc la tête de ce dernier sont extérieurs au conteneur. La tête de vérin est alignée avec la chemise de travail, selon le référentiel de la machine. Le plateau est centré sur la tête de vérin et le conteneur est, lui, indexé par rapport au châssis et, par conséquent, à la chemise, ce qui facilite la mise en place de l'ensemble et un bon positionnement du plateau par rapport à la chemise de travail.

Dans une variante, lesdits moyens d'indexage comprennent des poussoirs appartenant à un boîtier monté fixe sur le châssis coopérant avec des orifices réalisés sur la partie inférieure du conteneur de transport.

Dans une autre variante, lesdits moyens d'indexage comprennent des plots réalisés sur le rebord inférieur de la chemise coopérant avec des ouvertures réalisées sur le rebord supérieur du conteneur de transport.

Avantageusement, lesdits moyens de centrage comprennent deux orifices diamétralement opposés sur la face inférieure du plateau qui coopèrent avec des protubérances situées sur la face frontale de la tête du vérin.

Ainsi, avec seulement deux protubérances, notamment l'une de forme prismatique qui constitue un centreur dégagé qui empêche la rotation du plateau autour de l'axe Z (axe vertical au plan du plateau), et l'autre, diamétralement opposée ayant une forme cylindrique qui constitue un centreur complet et qui empêche les translations selon les axes X et Y (axes concourants appartenant au plan du plateau), on arrive à centrer parfaitement le plateau par rapport à la tête du vérin.

De préférence, ledit plateau coulisse librement à l'intérieur de ladite chemise et à l'intérieur dudit conteneur.

Par plateau coulissant librement, on comprend un plateau qui ne comporte pas de joint périphérique de contact avec la chemise de construction ou avec la chambre interne du conteneur. Une telle absence de joint permet d'éviter le frottement avec les parois internes de la chemise et du conteneur et de réduire les efforts au niveau du vérin d'actionnement du plateau. En effet, il a été constaté lors des tests effectués en laboratoire que, pour un jeu de coulissement bien défini en fonction de la taille des particules de poudre et pour une surface des parois internes de la chemise de rugosité adaptée à la granulométrie de la poudre, le coulissement du piston se fait sans blocage de l'interstice de coulissement par les particules de poudre. De surcroît, si certaines particules de poudre, parmi les plus fines, arrivent à passer dans l'interstice entre le plateau et la chemise, elles sont recueillies par le conteneur interchangeable placé en-dessous.

Avantageusement, le jeu de coulissement dudit plateau à l'intérieur dudit conteneur de transport est supérieur au jeu de coulissement dudit plateau à l'intérieur de ladite chemise.

Par jeu de coulissement on comprend un intervalle laissé entre la chemise et le plateau d'une part, et entre une enceinte interne du conteneur (à l'intérieur de laquelle se déplace le plateau) et le plateau d'autre part, pour permettre le déplacement du plateau. Selon l'invention, le jeu de coulissement entre la chemise et le conteneur, mesuré de préférence sur le pourtour du plateau, ou au moins dans un endroit où les deux pièces sont le plus rapprochées, est supérieur au même jeu mesuré entre l'enceinte interne du conteneur et le plateau (mesuré sur le pourtour de ce dernier ou au moins dans un endroit où les deux pièces sont le plus rapprochées). Ceci permet de réaliser un conteneur ayant une enceinte de réception du plateau de plus grandes dimensions que celles de l'ouverture centrale de la chemise et de simplifier ainsi la fabrication du conteneur, le plateau ayant besoin de précision de guidage seulement à l'intérieur de la chemise.

De préférence, ledit conteneur de transport comprend un soufflet souple étanche agencé entre ledit plateau et la paroi de fond du conteneur.

Ceci présente l'avantage de confiner la poudre à l'intérieur du conteneur et de protéger la machine et son environnement contre une pollution due aux particules de poudre, surtout en l'absence de joint d'étanchéité sur la périphérie du plateau.

Avantageusement, ladite chemise comporte sur son pourtour des ouvertures latérales qui sont amenées à communiquer avec un conteneur lorsqu'il est placé en-dessous.

Afin d'obtenir une couche de poudre déposée de manière uniforme sur toute la surface de la zone de travail, la poudre est généralement étalée sur une surface qui est plus étendue que celle de la zone de travail, elle dépasse donc d'une certaine distance le pourtour de la chemise de la machine. En pratiquant des ouvertures latérales sur le pourtour de la chemise, la poudre étalée en excès peut être récupérée intégralement par le conteneur agencé de manière étanche en dessous de la chemise de construction. Le conteneur de l'invention a ainsi pour rôle de collecter la poudre résultant de l'opération de fabrication de l'objet et de la transporter avec l'objet fabriqué à l'extérieur de la machine.

De préférence, ledit conteneur de transport comprend une chambre interne de réception dudit plateau de fabrication entourée d'un couloir périphérique communiquant en sa partie supérieure avec lesdites ouvertures latérales.

Le conteneur est ainsi réalisé sous la forme d'une boîte à double parois verticales définissant un couloir périphérique. Ceci permet d'avoir un stockage périphérique de poudre au sein du conteneur et de réduire les efforts des moyens d'actionnement du plateau (la charge étant reprise par le bâti de la machine), tout en réduisant la quantité de poudre dans la chambre interne du conteneur, le plateau pouvant ainsi descendre jusqu'au fond du conteneur. Les dimensions (largeur et hauteur) du couloir périphérique sont déterminées de manière à ce qu'il puisse stocker la quantité de poudre étalée et non fusionnée lors de la fabrication de l'objet.

De préférence, ledit vérin entraîne ledit plateau de fabrication moyennant un plateau intermédiaire.

Ceci permet de simplifier la construction du plateau de fabrication et de faciliter son évacuation du conteneur, par exemple en disposant les moyens de fixation du soufflet sur le plateau intermédiaire et dans le fond du conteneur.

Dans une variante préférée de réalisation de l'invention, lesdits moyens de déplacement vertical comprennent un cadre actionné en un mouvement de translation horizontale.

Un tel cadre est avantageusement agencé sous ledit conteneur de manière à être traversé par le vérin. Le déplacement en translation horizontale du cadre n'interfère donc pas avec celui du vérin, ce qui permet de séparer les deux actionnements et mouvements (du vérin et du conteneur) pour plus de simplification constructive et de fonctionnement de l'ensemble. On arrive ainsi, par le déplacement d'une seule pièce, qui est le cadre, à prendre appui en un ou plusieurs points sur ledit conteneur et assurer son déplacement en translation verticale au contact de la chemise.

Dans une autre variante de l'invention, lesdits moyens de déplacement vertical utilisent une partie de la course du vérin dans son mouvement d'approche effectué en direction de la chemise.

L'invention propose également un procédé pour la fabrication additive d'un objet tridimensionnel par frittage ou fusion de poudre à l'aide d'un faisceau énergétique agissant sur une couche de poudre dans une zone de travail d'une machine selon l'une des revendications précédentes, ladite zone de travail étant définie dans la partie supérieure d'une chemise de construction fixe dans laquelle est fabriqué ledit objet supporté par un plateau de fabrication qui coulisse à l'intérieur de ladite chemise de construction lorsqu'il est entraîné en translation verticale par la tête d'un vérin placé selon l'axe central de ladite chemise, ledit procédé étant caractérisé en ce que :
- l'on dispose ledit plateau à l'intérieur d'un conteneur de transport et
- l'on agence de manière amovible ledit conteneur de transport entre ladite chemise et ledit vérin,
- l'on déplace verticalement le conteneur de transport pour venir au contact de la chemise de construction,
- ledit conteneur étant ouvert en sa partie supérieure et en sa partie inférieure, et en ce que
- l'on transfère, à l'aide dudit vérin, ledit plateau entre ledit conteneur de transport et ladite chemise de construction qui forme un cadre de construction autour dudit plateau.

Avantageusement, le procédé de l'invention comporte des étapes de fabrication consistant successivement à :
- amener le plateau de support de l'objet au niveau supérieur de ladite chemise de construction,
- déposer une couche de poudre sur ledit plateau de fabrication,
- fusionner les particules de poudre selon une stratégie de fusion préétablie,
- répéter les étapes de dépose et de fusion couche par couche tout en faisant descendre progressivement ledit plateau de fabrication à l'intérieur de ladite chemise de construction jusqu'à l'obtention de l'objet,
- abaisser le plateau de fabrication jusqu'au fond du conteneur de transport,
- déplacer le vérin jusqu'à ce qu'il soit désolidarisé dudit plateau de fabrication,
- retirer le conteneur de transport de la machine.

L'invention sera mieux comprise grâce à la suite de la description, qui s'appuie sur les figures suivantes :
- la figure 1 est une vue schématique en coupe d'une machine selon l'invention ;
- la figure 2 est une vue schématique en coupe du conteneur qui équipe la machine de l'invention en position de travail lors de la fabrication de l'objet ;
- la figure 3 est une vue schématique en coupe du conteneur qui équipe la machine de l'invention à la fin de l'opération de fabrication de l'objet, le conteneur étant toujours fixé au châssis de la machine ;
- la figure 4 est une vue schématique en coupe du conteneur qui équipe la machine de l'invention à la fin de l'opération de fabrication de l'objet, le conteneur étant désolidarisé du châssis de la machine et le vérin étant retiré ;
- les figures 5 à 7 illustrent par des vues en perspective et latérale, un exemple de montage d'un actionneur de conteneur au sein de la machine de l'invention ;
- les figures 8 à 10 illustrent par une vue en perspective, une vue en coupe longitudinale et une vue de dessous, un exemple de réalisation d'un conteneur qui équipe la machine de l'invention ;
- la figure 11 illustre par une vue en coupe un conteneur qui équipe la machine de l'invention selon une variante de réalisation de l'invention.

Sur les différentes figures, les éléments identiques ou similaires portent les mêmes références. La description de leur structure et de leur fonction n'est donc pas systématiquement reprise.

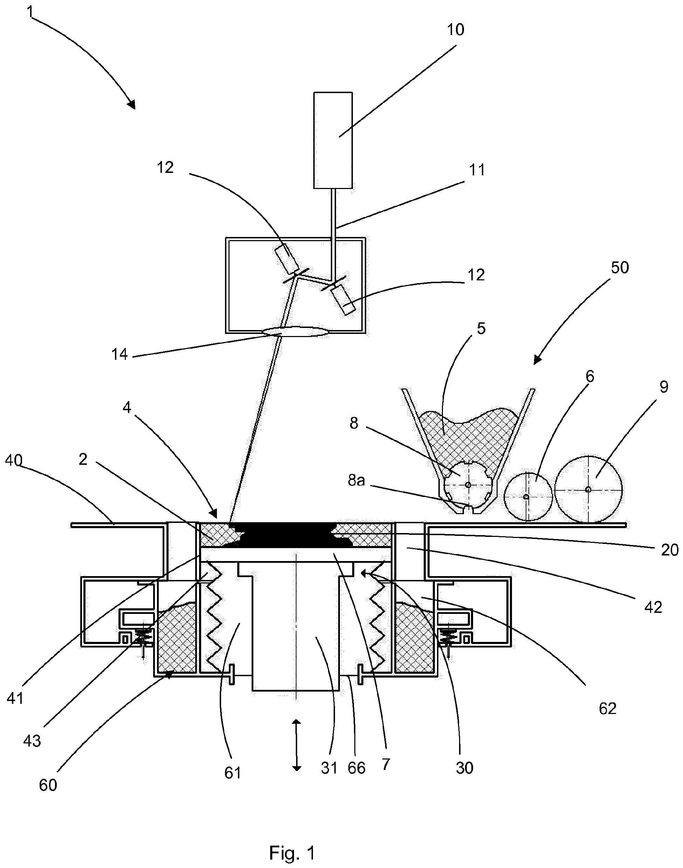

A la figure 1, on a représenté schématiquement un exemple de réalisation d'une machine 1 pour la fabrication additive d'une pièce 20. Comme décrit au préambule de la demande, l'invention s'applique en réalité à tous les types de fabrication additive à base de poudre par frittage ou par fusion totale des grains de ladite poudre à l'aide d'un faisceau énergétique comme un rayonnement électromagnétique (par exemple un faisceau laser) ou un faisceau de particules (par exemple un faisceau d'électrons).

Une source énergétique, ici une source laser 10, émet un faisceau laser 11 dont l'orientation est contrôlée par des miroirs galvanométriques 12. Une lentille optique 14 permet de focaliser le faisceau 11 au niveau de la zone de travail 4 afin de chauffer la couche supérieure de la poudre 2 selon un motif précis et ainsi réaliser de manière sélective la fusion de la poudre. Après le traitement par le faisceau laser d'une couche de poudre, le plateau de fabrication 7 est abaissé d'une épaisseur unitaire (correspondant à celle d'une couche de poudre) et recouvert d'une nouvelle couche de poudre et ainsi de suite afin de former, couche après couche, la pièce 20. Selon le type de faisceau énergétique et les poudres utilisés, l'épaisseur d'une couche de poudre peut varier de quelques micromètres (par exemple 10µm) à plusieurs centaines de micromètres (par exemple 500µm = 0.5 mm). Lorsque la pièce 20 est terminée c'est à dire lorsque toutes les couches nécessaires à sa construction ont été successivement solidifiées, la pièce est évacuée de la zone de travail.

La machine 1 comprend également un dispositif de mise en couche 50 permettant l'application d'une nouvelle couche de poudre sur la zone de travail 4. Le dispositif de mise en couche 50 de la figure 1 comprend une trémie d'alimentation 5 et un rouleau de répartition 6 de la poudre 2 sur la zone de travail 4. La trémie d'alimentation 5 comporte en sa partie inférieure un rouleau de dosage 8 comportant des rainures 8a ayant pour fonction de transférer une quantité précise ou dose de poudre 2 de la trémie 5 au rouleau de répartition 6. Le dispositif de mise en couche 50 comporte en outre un rouleau de compactage 9. L'épaisseur finale de la couche de poudre est donc le résultat de deux opérations successives. Une première épaisseur est définie par le rouleau de répartition 6, cette épaisseur étant ensuite réduite et rendue encore plus homogène par l'action du rouleau de compactage 9. Le rouleau de compactage 9 se déplace avec la trémie d'alimentation 5 et le rouleau de répartition 6. La trémie d'alimentation 5, le rouleau de répartition 6 et le rouleau de compactage 9 sont portés par un ou plusieurs chariots qui sont mobiles entre les moyens de stockage de poudre (non représentés) et la zone de travail 4.

La zone de travail 4 est délimitée au sein d'un châssis fixe 40 de la machine 1, par une chemise 41 à l'intérieur de laquelle coulisse le plateau de fabrication 7 entraîné en translation verticale par un vérin 31, tel qu'indiqué par la double flèche sur la figure 1. La chemise 41 est solidaire du châssis 40, en étant montée fixe sur le châssis 40 ou en étant réalisée en une pièce avec ce dernier. La chemise 41 a une section transversale de forme circulaire, carrée ou rectangulaire ou toute autre forme appropriée et est située au sein du châssis 40 en regard de la zone d'action de la source laser 10. La chemise 41 comporte une ouverture centrale 43 pour le passage du plateau 7 et des passages ou ouvertures latérales 42. Les ouvertures latérales 42 sont pratiquées sur le pourtour de la chemise 41, sur toute son hauteur, afin de permettre l'évacuation de l'excédent de poudre 2 lors de la mise en couche. Le plateau 7 a une section transversale ayant une même forme que celle de la chemise 41 et des dimensions proches de celles-ci à l'intérieur de laquelle il coulisse avec un jeu j1. Le plateau 7 forme un support pour l'objet tridimensionnel qui sera construit. La chemise 41 constitue le cadre de construction de l'objet et a une hauteur au moins égale à celle de l'objet tridimensionnel à construire à laquelle on additionne l'épaisseur du plateau 7.

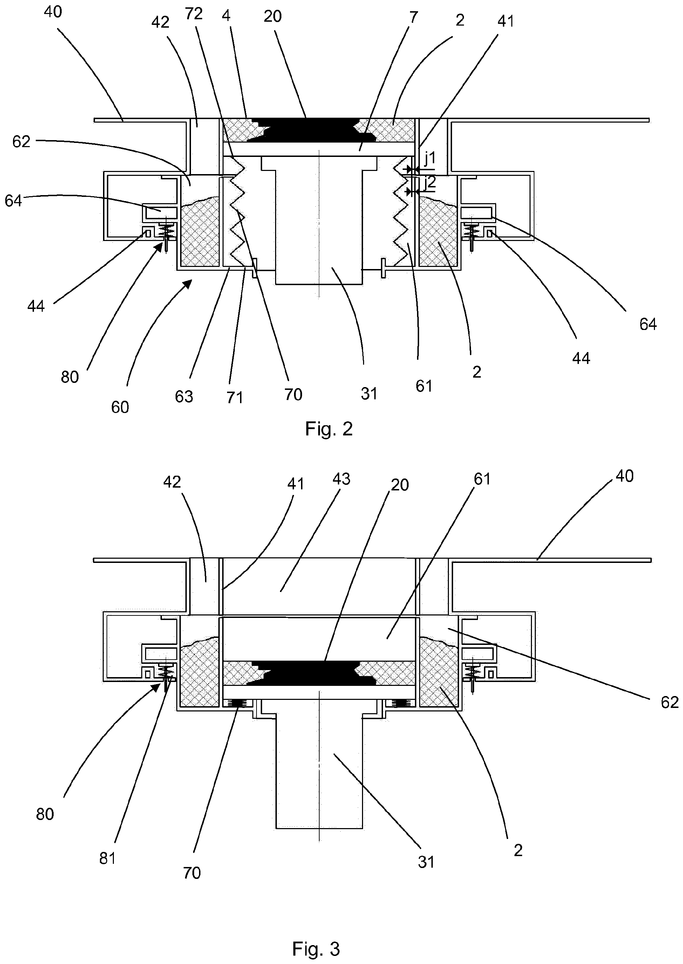

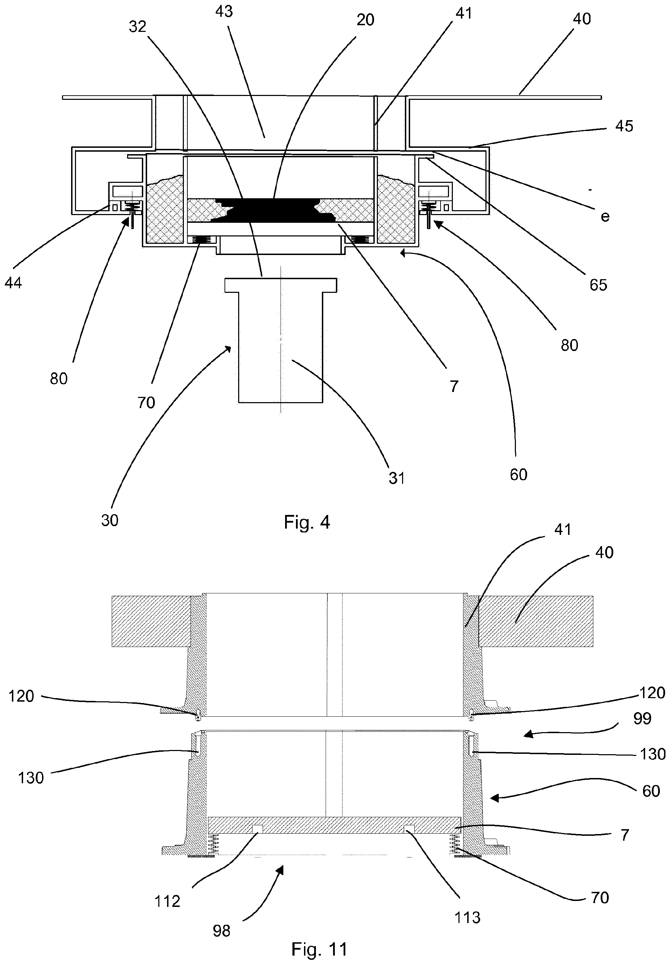

Le vérin 31 appartient à un ensemble de déplacement en translation 30. Par vérin on comprend un dispositif de levage, par exemple du type pantographe ou, de préférence, du type comportant un corps tubulaire à l'intérieur duquel se déplace en translation une tige rigide permettant de transmettre un déplacement et une vitesse à son extrémité. Le vérin 31 peut être du type hydraulique pneumatique ou électrique. Dans une variante préférée de réalisation de l'invention, on utilise un vérin électrique dont le déplacement de la tige peut être contrôlé de manière très précise. L'ensemble de déplacement en translation 30 comprend un boîtier externe solidaire du châssis 40 de la machine et des moyens de guidage en translation (non représentés aux dessins) du vérin 31.Le vérin 31 est guidé en translation à l'intérieur du boîtier externe de l'ensemble 30 entre une position haute (fig. 2) et une position basse (fig. 4), la tête 32 du vérin 31 étant destinée à venir en prise avec le plateau 7. Pour des raisons de simplification et de clarté des dessins, les différents composants de l'ensemble 30 ont été omis, hormis le vérin 31 dont le déplacement vertical permet de mieux décrire l'invention.

Selon l'invention, la machine 1 comprend un conteneur de transport 60, à l'intérieur duquel est disposé le plateau 7, le conteneur étant agencé sous la chemise 41 en étant ouvert en partie supérieure et en partie inférieure de manière à ce que la tête 32 du vérin 31 puisse transférer le plateau 7 entre le conteneur de transport 60 et la chemise 41. Le conteneur de transport 60 est mis en place au sein du châssis 40 sous la chemise 41, par exemple en le faisant glisser sur des rails horizontaux de ce dernier. Dans un mode de réalisation représenté à la fig. 2, le conteneur de transport 60 comporte des ailettes latérales 64 d'appui qui glissent le long des rails 44 horizontaux du châssis 40 jusqu'à une butée de fond qui lui permet un positionnement précis en regard de la chemise 41. Le conteneur de transport 60 est ensuite poussé verticalement vers le haut pour venir se plaquer contre la chemise 41, moyennant des poussoirs à ressort 81, puis il est maintenu en cette position, à l'aide du dispositif de verrouillage 80 comportant des moyens de blocage en position des poussoirs 81. Le rebord périphérique du conteneur de transport 60 comporte un joint d'étanchéité qui est plaqué sur la face en vis-à-vis de la chemise 41 afin d'éviter que la poudre sorte du conteneur de transport 60.

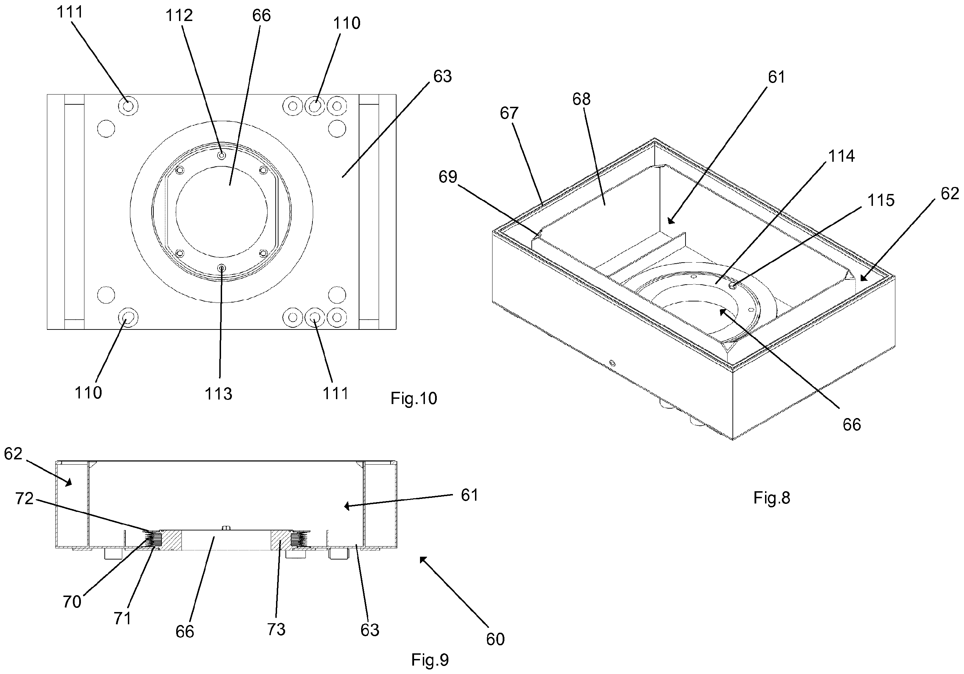

Le conteneur de transport 60 comprend une chambre interne 61 à l'intérieur de laquelle se déplace en translation verticale le plateau 7 sous l'action du vérin 31. La section transversale de la chambre interne 61 a une forme et des dimensions proches de celles du plateau 7, le jeu entre la périphérie externe du plateau 7 et les parois de la chambre interne 61 étant j2, avec j2>j1. Tel que mieux visible aux figures 2 et 9, le conteneur de transport 60 est réalisé sous forme d'une boîte à doubles parois verticales, la chambre interne 61 étant entourée d'un couloir périphérique 62 et étant séparée de celui-ci par des parois verticales 68. Le couloir périphérique 62 est ouvert en sa partie supérieure pour communiquer avec les ouvertures 42 du châssis 40 et fermé en sa partie inférieure pour pouvoir stocker la poudre 2. Les coins 69 des parois verticales 68 sont chanfreinés pour mieux guider la poudre vers le couloir périphérique 62 (le plateau 7 ayant dans ce cas des coins arrondis ou chanfreinés). La section transversale du couloir périphérique 62 est supérieure à celle d'une ouverture 42 correspondante, le couloir périphérique 62 étant dimensionné de manière à pouvoir stocker toute la quantité de poudre récupérée lors des différentes mises en couches successives nécessaires pour la fabrication de la pièce 20. Le conteneur de transport 60 comporte un joint périphérique 67 pour assurer l'étanchéité frontale avec la chemise 41.

Selon un aspect avantageux de l'invention, le plateau de fabrication 7 coulisse librement à l'intérieur de la chemise 41, aucun joint d'étanchéité n'étant prévu sur la périphérie du plateau, entre ce dernier et la chemise 41. En effet, il a été observé lors des tests effectués en laboratoire que, pour certaines valeurs de la rugosité de la chemise et du plateau et pour certaines valeurs du jeu entre ces pièces, les particules de poudre de la zone de travail ne bloquent pas l'interstice existant entre les parois internes de la chemise de construction 41, mais permettent le coulissement du plateau 7. Par ailleurs, afin de garantir le bon confinement de la poudre à l'intérieur du conteneur de transport 60 et de protéger les autres composants de la machine 1, un soufflet 70 est disposé dans la partie centrale du conteneur de transport 60, l'extrémité inférieure 71 du soufflet 70 étant fixée sur la paroi de fond 63 de la chambre interne 61, et l'extrémité supérieure 72 sur la face inférieure du plateau 7.

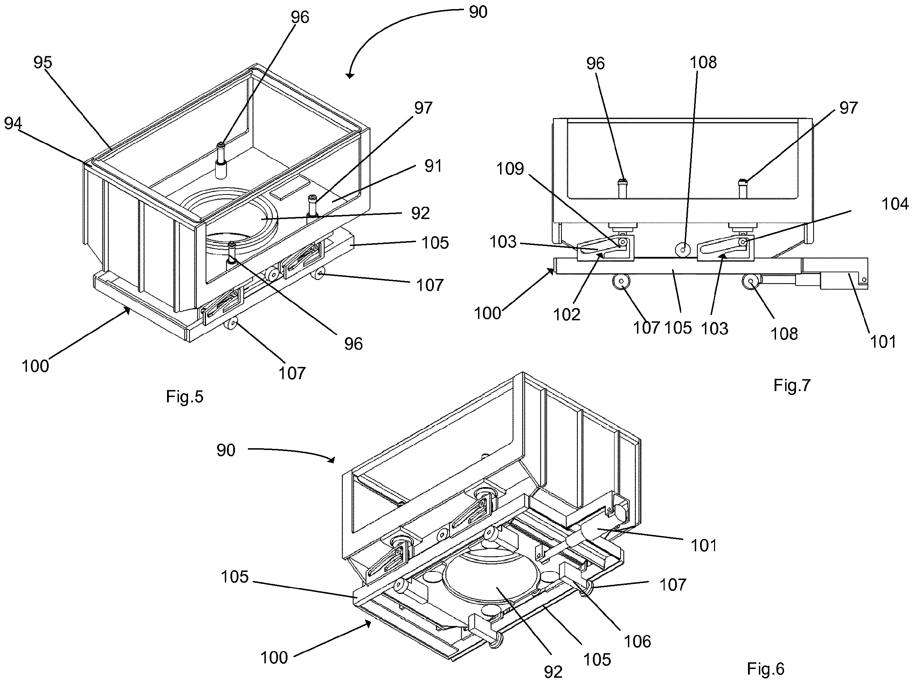

Dans un mode préféré de réalisation de l'invention, tel que visible aux figures 5 à 7, la machine 1 comprend un boîtier 90 de support monté fixe sur le châssis 40 de celle-ci et à l'intérieur duquel est introduit le conteneur de transport 60 amovible ou mobile. Le boîtier 90 est de forme générale parallélépipédique, il comporte une paroi de fond 91, dont un passage central 92 circulaire permet le passage du vérin 31, des parois latérales fermées, dont au moins une est apte à s'ouvrir pour permettre le passage du conteneur de transport 60, et un rebord supérieur 94 comportant un joint d'étanchéité périphérique 95 pour rendre étanche à la poussière le boîtier 90. A travers la paroi de fond 91 du boîtier 90 font saillie quatre poussoirs 96, 97 dont les axes verticaux sont placés dans les coins d'un rectangle ayant le même centre que le passage 92. Les poussoirs diagonalement opposés sont identiques, deux poussoirs 96 ont chacun une extrémité supérieure de forme conique et les deux autres poussoirs 97 ont chacun une extrémité supérieure de forme cylindrique. Les poussoirs 96, 97 viennent en prise avec des orifices de forme correspondante réalisés sur le conteneur de transport 60, tel qu'il sera expliqué par la suite.

Les poussoirs 96, 97 sont déplacés en un mouvement de translation verticale par un cadre 100 lorsqu'il est, lui, entraîné en un mouvement de translation horizontale par un actionneur 101. Plus particulièrement, le cadre 101 est de forme rectangulaire, le contour externe du cadre 100 ayant des dimensions proches de celles de la base du boîtier 90. Le cadre 100 est muni de cames 102 sur chaque côté longitudinal. Les cames 102 comportent des rampes 103 sur lesquels se déplacent des galets suiveurs 104 montés aux extrémités inférieures des poussoirs 96, 97. Une came 102 comporte deux rampes 103 parallèles fixées chacune sur une face latérale du côté 105. L'extrémité inférieure de chaque poussoir 96, 97 est munie de deux galets suiveurs 104 venant chacun au contact d'une rampe 103. La rampe 103 a une forme de sillon découpé dans l'épaisseur de la came et qui se termine à l'extrémité d'une languette flexible 109. La languette 109 est une poutre flexible qui permet d'absorber les différences d'épaisseur entre plusieurs conteneurs 60, tout en garantissant un serrage suffisant au maintien du conteneur de transport 60, plus précisément de son joint d'étanchéité périphérique 67, plaqué contre la chemise 41. De surcroît, les rampes 103 assurent la descente progressive du conteneur lorsqu'il est désolidarisé du châssis 40, à la fin de l'opération de fabrication.

Dans une autre variante (non représentée) les rampes 103 sont rigides, les poussoirs 96,97 étant dans ce cas munis des moyens de réglage en hauteur afin de pouvoir s'adapter à la hauteur du conteneur et d'assurer le maintien de celui-ci plaqué contre la chemise 41 de la machine.

Quatre supports de montage 106 des galets inférieurs 107, 107' font saillie à l'extérieur de la paroi de fond 91 du boîtier 90, ces galets inférieurs étant agencés de manière à ce que deux galets 107, 107' viennent en contact avec la partie inférieure de chaque côté longitudinal 105 du cadre 100. Deux galets 107 sont des galets en V coulissant sur un rail en V pour guider latéralement le cadre 100, les deux autres galets 107' étant eux des galets plats en contact avec un rail plat. Un galet supérieur 108 est fixé à la paroi de fond 91 du boîtier 90 de manière à ce qu'il vient appuyer sur la partie supérieure de chaque côté 105 du cadre 100 et rattraper ainsi les jeux de montage de ce cadre. Le cadre 100 est ainsi guidé en son mouvement de translation horizontale par rapport au boîtier 90 lorsqu'il est entraîné par l'actionneur 101. L'actionneur 101 est avantageusement du type électrique et est commandé pour verrouiller le conteneur de transport 60 lorsqu'il est mis en place à l'intérieur du boîtier 90.

Les figures 8 à 10 illustrent un exemple de réalisation d'un conteneur de transport 60 de l'invention qui est apte à être introduit à l'intérieur du boîtier 90 et à coopérer avec les poussoirs 96, 97 de ce dernier. Tel que mieux visible à la fig. 10, la paroi de fond 63 est munie de moyens de connexion du conteneur de transport 60 avec les poussoirs 96, 97 du boîtier 90. Ainsi, deux protubérances diamétralement opposées par rapport au centre de l'ouverture 66 comportent chacune un orifice de forme circulaire 111 prévu pour venir en prise avec un poussoir à extrémité conique 96 pour assurer le centrage du conteneur de transport 60. Deux autres protubérances diamétralement opposées par rapport au centre de l'ouverture 66 comportent chacune un orifice de forme oblongue 110 prévu pour venir en prise avec un poussoir à extrémité cylindrique 97 pour assurer l'orientation du conteneur de transport 60 par rapport au boîtier 90. Lorsque le conteneur de transport 60 est mis en place à l'intérieur du boîtier 90, l'actionneur 101 commande la fixation du conteneur de transport 60 qui est alors plaqué contre la chemise 40.

Dans une variante préférée de réalisation de l'invention et tel que mieux illustré à la fig. 9, le soufflet 70 est maintenu à l'intérieur du conteneur de transport 60 à l'aide d'un plateau intermédiaire 73. Le plateau intermédiaire 73 est amené à venir au contact de la tête 32 du vérin 31 et avec le plateau 7 (non représenté aux figures 8 à 10) et il repose au fond du conteneur de transport 60 lorsque le vérin 31 est en position basse. Des protubérances verticales de support du plateau 7 sont prévues au fond du conteneur afin d'empêcher l'écrasement du soufflet 70.

Le plateau 7 et, lorsqu'il est présent, le plateau intermédiaire 73, comportent chacun des moyens de centrage 98 l'un par rapport à l'autre et par rapport à la tête 32 du vérin 31. Ainsi, tel que visible aux figures 8 et 10, le plateau intermédiaire 73 comprend deux orifices diamétralement opposés 112, 113 qui coopèrent avec des protubérances situées sur la face frontale de la tête 32 du vérin 31. La face frontale 114 du plateau intermédiaire est munie également de protubérances identiques à celles de la tête 32 (une première protubérance 115 étant visible à la figure 8, l'autre étant diamétralement opposée à la première) pour coopérer avec des orifices situés sur la face inférieure du plateau 7. La protubérance 115 a une forme prismatique et constitue un centreur dégagé afin d'empêcher la rotation du plateau autour de l'axe Z (axe vertical au plan du plateau), la protubérance diamétralement opposée ayant une forme cylindrique et constitue un centreur complet qui empêche les translations selon les axes X et Y (axes concourants appartenant au plan du plateau).

La figure 11 illustre par une vue en coupe réalisée avec un plan vertical passant par la diagonale du plateau, une variante de réalisation de l'invention. Une chemise de travail 41 de section transversale rectangulaire est fixée sur le châssis 40 de la machine. Le conteneur de transport 60 a une forme générale parallélépipédique et est illustré dans sa position d'introduction dans la machine, entre la chemise de travail 41 et la tête de vérin (non illustrée dans cette figure). Au fond du conteneur de transport 60 se trouvent un plateau 7 et un soufflet 70 tenus par une plaque de support périphérique et à travers laquelle passe la tête du vérin. La machine comprend des moyens d'indexage 99 permettant d'assurer l'orientation du conteneur de transport 60 par rapport à la chemise de travail 41 lors de la mise en place du conteneur, avant le début de l'opération de fabrication de l'objet. Les moyens d'indexage 99 comprennent deux plots 120 réalisés sur le rebord inférieur de la chemise de travail 41, agencés selon la diagonale de celui-ci, plots qui coopèrent avec des orifices 130 réalisées sur le rebord supérieur du conteneur de transport 60. Les orifices sont suffisamment profonds afin de pouvoir stocker d'éventuels résidus de poudre sans gêner le guidage des plots 120. Le conteneur de transport 60 est déplacé verticalement par des moyens de déplacement (non représentés) et prend appui de manière étanche sur le rebord inférieur de la chemise de travail 41. A titre d'exemple, une partie de la course du vérin peut être utilisée pour déplacer le conteneur de transport 60 en direction de la chemise de travail 41. Des moyens de centrage 98 sont également prévus, notamment deux orifices diamétralement opposés 112, 113 (situés sur la même diagonale du plateau) qui coopèrent avec des protubérances prévues à cet effet sur la face frontale de la tête 32 du vérin 31. Ces protubérances sont avantageusement du même type que celles décrites en référence aux figures 8 à 10.

En fonctionnement, on commence par approvisionner la machine 1 en un conteneur de transport 60 à l'intérieur duquel se trouve un plateau 7 qui repose directement au fond du conteneur de transport 60 via un soufflet 70 ou, dans une variante, sur un plateau intermédiaire 73. Le conteneur de transport 60 comprend également un soufflet 70 qui se trouve à l'état comprimé au fond du conteneur. Le conteneur de transport 60 est agencé en dessous de la chemise 41, par exemple en le faisant glisser sur les rails 44, jusqu'à une position de butée, ou en le posant sur les poussoirs 96, 97. Le conteneur se trouve dans la même position par rapport à la chemise 41 et au vérin 31 que celle illustrée à la figure 4. Ainsi, la bordure supérieure 65 du conteneur de transport 60 est située sous la chemise de travail 41, à une distance « e » par rapport à la face inférieure 45 en vis-à-vis de la chemise. Lorsque le conteneur de transport 60 est bien positionné par rapport au châssis de la machine, on actionne un dispositif de verrouillage 80 de ce dernier par rapport à la chemise 41 ou, dans une variante, on imprime un mouvement de translation horizontale au cadre 100 qui entraîne les poussoirs 96,97 en un mouvement de translation verticale pour plaquer le conteneur de transport 60 contre la chemise 41, le conteneur de transport 60 étant dans la position illustrée à la figure 3. Le conteneur de transport 60 est maintenu en cette position durant toute la fabrication de la pièce 20. Une fois le conteneur fixé au châssis 40, les moyens de contrôle de la machine permettent l'actionnement du vérin 31 en un mouvement de translation vers le haut jusqu'à ce que sa tête 32 vienne en appui contre la face inférieure du plateau 7 (ou lorsqu'il est présent, du plateau intermédiaire 73).

De préférence, le blocage de la tête 32 sur le plateau 7 se fait par le vide, des moyens étant prévus à cet effet dans les deux composants (non illustrés sur les figures). Le plateau de fabrication 7 est poussé vers le haut par le vérin 31, commandé par les moyens de contrôle de la machine, à travers la chambre interne 61 et la chemise de construction 41 jusqu'à ce qu'il arrive au même niveau que la face supérieure de celle-ci. Le plateau 7 est maintenant prêt à recevoir une couche de poudre en provenance du dispositif de mise en couche 50. La couche de poudre déposée est chauffée par le faisceau laser et solidifiée dans des points précis de sa surface, selon les instructions reçues d'une unité de commande de la machine 1. Après solidification de la première couche de poudre, le plateau descend d'une distance équivalente à une épaisseur de couche de poudre, en étant entraîné par le vérin 31, de manière à pouvoir continuer la fabrication par dépôt et solidification d'une nouvelle couche de poudre. A la fin de l'opération de fabrication de la pièce 20, le vérin 31 descend et le plateau 7 quitte la chemise de travail 41, le vérin continuant sa course jusqu'à ce que le plateau 7 supportant l'objet fabriqué se trouve au fond du conteneur de transport 60, tel qu'illustré à la figue 3. La tête de vérin 32 descend encore et est désolidarisée du plateau 7. Le dispositif de verrouillage 80, ou le cadre 100, sont ensuite actionnés pour détacher le conteneur de transport 60 du châssis 40, tel que visible à la figure 4. Le conteneur de transport 60 peut maintenant être retiré du châssis 40 et transporté (manuellement par un opérateur ou de préférence automatiquement à l'aide des moyens mécaniques, tels un convoyeur à chaines, d'un bras de robot, etc.) vers un autre poste de travail qui permet de récupérer la pièce 20 et le plateau 7 de la chambre interne 61, ainsi que la poudre 2 présente dans le couloir périphérique 62.

La poudre utilisée est de préférence une poudre métallique ou céramique. Selon les types de faisceaux énergétiques mis en oeuvre et l'épaisseur de la couche finale visée, la granulométrie préférée de la poudre peut varier de quelques microns (par exemple 5 µm) à 300 ou 400 µm.

## Revendications

1. Machine (1) pour la fabrication additive d'un objet tridimensionnel par frittage ou fusion de poudre (2) à l'aide d'un faisceau énergétique (3) agissant sur une couche de poudre dans une zone de travail (4), ladite zone de travail étant définie dans la partie supérieure
- d'une chemise de construction (41) montée fixe au sein d'un châssis (40), chemise dans laquelle est fabriqué ledit objet supporté par
- un plateau (7) de fabrication qui coulisse à l'intérieur de ladite chemise de construction (41) lorsqu'il est entraîné en translation verticale par
- la tête (32) d'un vérin (31) placé selon l'axe central de ladite chemise,
ladite machine étant **caractérisée en ce que** ledit plateau de fabrication (7) est disposé à l'intérieur d'un conteneur de transport (60) qui est agencé de manière amovible entre ladite chemise et ledit vérin (31),
- **en ce que** la machine comporte des moyens de déplacement vertical du conteneur de transport (60) au contact de la chemise de construction (41) et
- **en ce que** le conteneur est ouvert en sa partie supérieure et en sa partie inférieure de manière à ce que, lorsque le vérin (31) est actionné, la tête (32) de ce dernier puisse transférer ledit plateau (7) entre ledit conteneur (60) de transport et ladite chemise de construction (41) qui forme un cadre de construction autour dudit plateau.

2. Machine selon la revendication 1, **caractérisée en ce que** l'axe central de la tête de vérin (32) est aligné avec l'axe central de ladite chemise (41) et que des moyens d'indexage (99) sont prévus entre ledit conteneur de transport (60) et le châssis (40) de la machine et des moyens de centrage (98) sont prévus entre le plateau (7) et la tête (32) du vérin.

3. Machine selon la revendication 2, **caractérisé en ce que** lesdits moyens d'indexage (99) comprennent des poussoirs (96,97) appartenant à un boîtier (90) monté fixe sur le châssis (40) coopérant avec des orifices (110, 111) réalisés sur la partie inférieure du conteneur de transport (60).

4. Machine selon la revendication 2, **caractérisée en ce que** lesdits moyens d'indexage (99) comprennent des plots (120) réalisés sur le rebord inférieur de la chemise (41) coopérant avec des ouvertures (130) réalisées sur le rebord supérieur du conteneur de transport (60).

5. Machine selon l'une des revendications 2 à 4, **caractérisée en ce que** lesdits moyens de centrage (98) comprennent deux orifices diamétralement opposés (112, 113) sur la face inférieure du plateau qui coopèrent avec des protubérances situées sur la face frontale de la tête (32) du vérin (31).

6. Machine selon l'une des revendications précédentes, **caractérisée en ce que** ledit plateau (7) coulisse librement à l'intérieur de ladite chemise (41) et à l'intérieur dudit conteneur de transport (60).

7. Machine selon l'une des revendications précédentes, **caractérisée en ce que** le jeu de coulissement dudit plateau (7) à l'intérieur dudit conteneur de transport (60) est supérieur au jeu de coulissement dudit plateau (7) à l'intérieur de ladite chemise (41).

8. Machine selon l'une des revendications précédentes, **caractérisée en ce que** ledit conteneur de transport (60) comprend un soufflet souple (70) étanche agencé entre ledit plateau (7) et sa paroi de fond (63).

9. Machine selon l'une des revendications précédentes, **caractérisée en ce que** ladite chemise (41) comporte sur son pourtour des ouvertures latérales (42) qui sont amenées à communiquer avec un conteneur de transport (60) lorsqu'il est placé en-dessous.

10. Machine selon la revendication 9, **caractérisée en ce que** ledit conteneur de transport (60) comprend une chambre interne (61) de réception dudit plateau de fabrication (7) entourée d'un couloir périphérique (62) communiquant en sa partie supérieure avec lesdites ouvertures latérales (42).

11. Machine selon l'une des revendications précédentes, **caractérisée en ce que** ledit vérin (31) entraîne ledit plateau de fabrication (7) moyennant un plateau intermédiaire (73).

12. Machine selon l'une des revendications précédentes, **caractérisée en ce que** lesdits moyens de déplacement vertical comprennent un cadre (100) actionné en un mouvement de translation horizontale.

13. Procédé pour la fabrication additive d'un objet tridimensionnel par frittage ou fusion de poudre (2) à l'aide d'un faisceau énergétique (3) agissant sur une couche de poudre dans une zone de travail (4) d'une machine selon l'une des revendications précédentes, ladite zone de travail étant définie dans la partie supérieure
- d'une chemise de construction (41) fixe dans laquelle est fabriqué ledit objet supporté par
- un plateau (7) de fabrication qui coulisse à l'intérieur de ladite chemise de construction (41), lorsqu'il est entraîné en translation verticale par
- la tête (32) d'un vérin (31) placé selon l'axe central de ladite chemise,
ledit procédé étant **caractérisé en ce que** :
- l'on dispose ledit plateau (7) à l'intérieur d'un conteneur de transport (60) et
- l'on agence de manière amovible ledit conteneur de transport (60) entre ladite chemise (41) et ledit vérin (31),
- l'on déplace verticalement le conteneur de transport (60) pour venir au contact de la chemise de construction (41),
- ledit conteneur étant ouvert en sa partie supérieure et en sa partie inférieure, et **en ce que**
- l'on transfère ledit plateau (7) entre ledit conteneur de transport (60) et ladite chemise de construction (41) qui forme un cadre de construction autour dudit plateau (7) à l'aide dudit vérin (31).

14. Procédé selon la revendication 13, **caractérisé en ce qu'**il comprend des étapes de fabrication consistant successivement à :
- amener le plateau de support de l'objet au niveau supérieur de ladite chemise de construction (41),
- déposer une couche de poudre sur ledit plateau de fabrication (7),
- fusionner les particules de poudre selon une stratégie de fusion préétablie,
- répéter les étapes de dépose et de fusion couche par couche tout en faisant descendre progressivement ledit plateau de fabrication (7) à l'intérieur de ladite chemise de construction (41) jusqu'à l'obtention de l'objet,
- abaisser le plateau de fabrication (7) jusqu'au fond du conteneur de transport (60),
- déplacer le vérin (31) jusqu'à ce qu'il soit désolidarisé dudit plateau de fabrication (7),
- retirer le conteneur de transport (60) de la machine.

## Patentansprüche

1. Maschine (1) für die additive Fertigung eines dreidimensionalen Objekts durch Sintern oder Schmelzen eines Pulvers (2) mit Hilfe eines energetischen Strahlenbündels (3), das auf einer Pulverschicht in einer Arbeitszone (4) definiert ist im oberen Teil
- einer Konstruktionshülle (41), die in einem Chassis (40) fest montiert ist, wobei in der Hülle das Objekt gefertigt wird, das getragen wird durch
- eine Fertigungsplatte (7), die in der Konstruktionshülle (41) gleitet, wenn sie vertikal translatorisch angetrieben wird durch
- den Kopf (32) eines Stellzylinders (31), der längs der Mittelachse der Hülle angeordnet ist,
wobei die Maschine **dadurch gekennzeichnet ist, dass** die Fertigungsplatte (7) in einem Transportbehälter (60) angeordnet ist, der lösbar zwischen der Hülle und dem Stellzylinder (31) angeordnet ist,
- dass die Maschine Mittel zum vertikalen Verlagern des Transportbehälters (60) in Kontakt mit der Konstruktionshülle (41) umfasst und
- dass der Behälter in seinem oberen Teil und in seinem unteren Teil offen ist, derart, dass dann, wenn der Stellzylinder (31) betätigt wird, der Kopf (32) dieses Letzteren die Platte (7) zwischen dem Transportbehälter (60) und der Konstruktionshülle (41), die einen Konstruktionsrahmen um die Platte bildet, umladen kann.

2. Maschine nach Anspruch 1, **dadurch gekennzeichnet, dass** die Mittelachse des Stellzylinderkopfes (32) auf die Mittelachse der Hülle (41) ausgerichtet ist und dass Indexierungsmittel (99) zwischen dem Transportbehälter (60) und dem Chassis (40) der Maschine vorgesehen sind und Zentrierungsmittel (98) zwischen der Platte (7) und dem Stellzylinderkopf (32) vorgesehen sind.

3. Maschine nach Anspruch 2, **dadurch gekennzeichnet, dass** die Indexierungsmittel (99) Drücker (96, 97) umfassen, die zu einem Gehäuse (90) gehören, das an dem Chassis (40) fest montiert ist, die mit Öffnungen (110, 111) zusammenwirken, die an dem unteren Teil des Transportbehälters (60) verwirklicht sind.

4. Maschine nach Anspruch 2, **dadurch gekennzeichnet, dass** die Indexierungsmittel (99) Erhebungen (120) umfassen, die am unteren Rand der Hülle (41) verwirklicht sind und mit Öffnungen (130) zusammenwirken, die am oberen Rand des Transportbehälters (60) verwirklicht sind.

5. Maschine nach einem der Ansprüche 2 bis 4, **dadurch gekennzeichnet, dass** die Zentrierungsmittel (98) zwei diametral gegenüberliegende Öffnungen (112, 113) auf der unteren Fläche der Platte aufweisen, die mit Vorsprüngen zusammenwirken, die sich auf der vorderen Fläche des Kopfes (32) des Stellzylinders (31) befinden.

6. Maschine nach einem der vorhergehenden Ansprüche, **dadurch gekennzeichnet, dass** die Platte (7) in der Hülle (41) und in dem Transportbehälter (60) frei gleitet.

7. Maschine nach einem der vorhergehenden Ansprüche, **dadurch gekennzeichnet, dass** das Gleitspiel der Platte (7) in dem Transportbehälter (60) größer als das Gleitspiel der Platte (7) in der Hülle (41) ist.

8. Maschine nach einem der vorhergehenden Ansprüche, **dadurch gekennzeichnet, dass** der Transportbehälter (60) einen dichten, nachgiebigen Balg (70) umfasst, der zwischen der Platte (7) und seiner Bodenwand (63) angeordnet ist.

9. Maschine nach einem der vorhergehenden Ansprüche, **dadurch gekennzeichnet, dass** die Hülle (41) an ihrem Umfang seitliche Öffnungen (42) aufweist, die ausgebildet sind, um mit einem Transportbehälter (60) zu kommunizieren, wenn er darunter angeordnet ist.

10. Maschine nach Anspruch 9, **dadurch gekennzeichnet, dass** der Transportbehälter (60) eine Innenkammer (61) für die Aufnahme der Fertigungsplatte (7) umfasst, die von einem Umfangsdurchgang (62) umgeben ist, der in seinem oberen Teil mit den seitlichen Öffnungen (42) kommuniziert.

11. Maschine nach einem der vorhergehenden Ansprüche, **dadurch gekennzeichnet, dass** der Stellzylinder (31) die Fertigungsplatte (7) mittels einer Zwischenplatte (73) antreibt.

12. Maschine nach einem der vorhergehenden Ansprüche, **dadurch gekennzeichnet, dass** die Vertikalverlagerungsmittel einen Rahmen (100) umfassen, der zu einer horizontalen translatorischen Bewegung betätigt wird.

13. Verfahren für die additive Fertigung eines dreidimensionalen Objekts durch Sintern oder Schmelzen eines Pulvers (2) mit Hilfe eines energetischen Strahlenbündels (3), das auf eine Pulverschicht in einer Arbeitszone (4) einer Maschine nach einem der vorhergehenden Ansprüche einwirkt, wobei die Arbeitszone im oberen Teil definiert ist durch
- eine feste Konstruktionshülle (41), in der das Objekt gefertigt wird, das getragen wird durch
- eine Fertigungsplatte (7), die in der Konstruktionshülle (41) gleitet, wenn sie vertikal translatorisch angetrieben wird durch
- den Kopf (32) eines Stellzylinders (31), der längs der Mittelachse der Hülle angeordnet ist,
wobei das Verfahren **dadurch gekennzeichnet ist, dass**:
- die Platte (7) in einem Transportbehälter (60) angeordnet wird und
- der Transportbehälter (60) zwischen der Hülle (41) und dem Stellzylinder (31) entnehmbar angeordnet wird,
- der Transportbehälter (60) vertikal verlagert wird, um mit der Konstruktionshülle (41) in Kontakt zu gelangen,
- wobei der Behälter in seinem oberen Teil und in seinem unteren Teil offen ist, und dass
- die Platte (7) zwischen dem Transportbehälter (60) und der Konstruktionshülle (41), die einen Konstruktionsrahmen um die Platte (7) bildet, mit Hilfe des Stellzylinders (31) umgeladen wird.

14. Verfahren nach Anspruch 13, **dadurch gekennzeichnet, dass** es die Fertigungsschritte umfasst, die nacheinander Folgendes umfassen:
- Bringen der Platte zum Tragen des Objekts auf eine Höhe oberhalb der Konstruktionshülle (41),
- Ablagern einer Pulverschicht auf der Fertigungsplatte (7),
- Schmelzen der Pulverpartikel gemäß einer im Voraus eingestellten Schmelzstrategie,
- Wiederholen der Schritte des Ablagerns und des Schmelzens Schicht für Schicht und dabei allmähliches Absenken der Fertigungsplatte (7) in der Konstruktionshülle (41), bis das Objekt erhalten worden ist,
- Absenken der Fertigungsplatte (7) bis auf den Boden des Transportbehälters (60),
- Verlagern des Stellzylinders (31), bis er von der Fertigungsplatte (7) gelöst ist,
- Entnehmen des Transportbehälters (60) aus der Maschine.

## Claims

1. Machine (1) for the additive manufacture of a three-dimensional object by sintering or melting powder (2) using a beam (3) of energy acting on a layer of powder in a working zone (4), the said working zone being defined in the upper part
- of a build sleeve (41) fixedly mounted in a chassis (40), in which sleeve the said object is manufactured, the said object being supported by
- a build plate (7) which slides inside the said build sleeve (41) when driven in vertical translation by
- the head (32) of an actuating cylinder (31) placed along the central axis of the said sleeve,
the said machine being **characterized in that** the said build plate (7) is positioned inside a transport container (60) which is arranged removably between the said sleeve and the said actuating cylinder (31),
- **in that** the machine comprises means for moving the transport container (60) vertically into contact with the build sleeve (41) and
- **in that** the container is open at its top and at its bottom so that, when the actuating cylinder (31) is actuated, the head (32) thereof can transfer the said plate (7) between the said transport container (60) and the said build sleeve (41) which forms a build envelope around the said plate.

2. Machine according to Claim 1, **characterized in that** the central axis of the actuating-cylinder head (32) is aligned with the central axis of the said sleeve (41), and **in that** indexing means (99) are provided for indexing between the said transport container (60) and the chassis (40) of the machine and centring means (98) are provided for centring between the plate (7) and the head (32) of the actuating cylinder.

3. Machine according to Claim 2, **characterized in that** the said indexing means (99) comprise push rods (96, 97) belonging to a box (90) fixedly mounted on the chassis (40) collaborating with orifices (110, 111) made in the bottom part of the transport container (60).

4. Machine according to Claim 2, **characterized in that** the said indexing means (99) comprise studs (120) made on the bottom rim of the sleeve (41) and collaborating with openings (130) made on the top rim of the transport container (60).

5. Machine according to one of Claims 2 to 4, **characterized in that** the said centring means (98) comprise two diametrically opposite orifices (112, 113) on the bottom face of the plate which collaborate with protuberances situated on the frontal face of the head (32) of the actuating cylinder (31).

6. Machine according to one of the preceding claims, **characterized in that** the said plate (7) slides freely inside the said sleeve (41) and inside the said transport container (60).

7. Machine according to one of the preceding claims, **characterized in that** the sliding clearance for the sliding of the said plate (7) inside the said transport container (60) is greater than the sliding clearance for the sliding of the said plate (7) inside the said sleeve (41).

8. Machine according to one of the preceding claims, **characterized in that** the said transport container (60) comprises a sealed flexible gaiter (70) arranged between the said plate (7) and its bottom wall (63).

9. Machine according to one of the preceding claims, **characterized in that** the said sleeve (41) on its periphery comprises lateral openings (42) which are made to communicate with a transport container (60) when it is placed underneath.

10. Machine according to Claim 9, **characterized in that** the said transport container (60) comprises an internal chamber (61) for accepting the said build plate (7), which chamber is surrounded by a peripheral corridor (62) communicating at its top with the said lateral openings (42).

11. Machine according to one of the preceding claims, **characterized in that** the said actuating cylinder (31) drives the said build plate (7) via an intermediate plate (73).

12. Machine according to one of the preceding claims, **characterized in that** the said vertical-movement means comprise a frame (100) actuated in a horizontal translational movement.

13. Method for the additive manufacture of a three-dimensional object by sintering or melting powder (2) using a beam (3) of energy acting on a layer of powder in a working zone (4) of a machine according to one of the preceding claims, the said working zone being defined in the upper part
- of a fixed build sleeve (41) in which the said object is manufactured, the said object being supported by
- a build plate (7) which slides inside the said build sleeve (41) when driven in vertical translation by
- the head (32) of an actuating cylinder (31) placed along the central axis of the said sleeve,
the said method being **characterized in that**:
- the said plate (7) is positioned inside a transport container (60) and
- the said transport container (60) is arranged removably between the said sleeve (41) and the said actuating cylinder (31),
- the transport container (60) is moved vertically until it comes into contact with the build sleeve (41),
- the said container being open at its top and at its bottom, and **in that**
- the said plate (7) is transferred between the said transport container (60) and the said build sleeve (41) which forms a build envelope around the said plate (7), using the said actuating cylinder (31).

14. Method according to Claim 13, **characterized in that** it comprises manufacturing steps successively consisting in:
- bringing the object support plate to the top of the said build sleeve (41),
- depositing a layer of powder on the said build plate (7),
- melting the powder particles using a pre-established melting strategy,
- repeating the depositing and melting steps layer by layer while at the same time progressively lowering the said build plate (7) down inside the said build sleeve (41) until the object is obtained,
- lowering the build plate (7) to the bottom of the transport container (60),
- moving the actuating cylinder (31) until it is detached from the said build plate (7),
- removing the transport container (60) from the machine.
